(19) Europäisches Patentamt
European Patent Office
Office européen des brevets

(11) Publication number: 0 044 117 B1

(12) EUROPEAN PATENT SPECIFICATION

(45) Date of publication of patent specification: 03.09.86

(51) Int. Cl.[4]: B 01 J 23/76, B 01 J 37/00

(21) Application number: 81200799.5

(22) Date of filing: 13.07.81

# (54) Catalyst.

(30) Priority: 16.07.80 GB 8023225

(43) Date of publication of application:
20.01.82 Bulletin 82/03

(45) Publication of the grant of the patent:
03.09.86 Bulletin 86/36

(84) Designated Contracting States:
AT BE CH DE FR IT LI LU NL SE

(56) References cited:
DE-C- 740 634
GB-A-1 056 685
GB-A-1 220 105
GB-A-1 336 866
US-A-2 695 893
US-A-3 394 086
US-A-4 215 998

The file contains technical information submitted after the application was filed and not included in this specification

(73) Proprietor: DYSON REFRACTORIES LIMITED
381 Fulwood Road
Sheffield, S10 3GB (GB)

(72) Inventor: Sambrook, Rodney Martin
31 Gainsborough Road
Dronfield Sheffield, S18 6QT (GB)
Inventor: Huxham Ross, Julian Richard
15 Sherwood Avenue
Gomersal Cleckheaton, BD19 4RW (GB)

(74) Representative: Shaw, Laurence et al
George House George Road
Edgbaston Birmingham B15 1PG (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 117 B1

**Description**

The invention relates to catalysts containing nickel, aluminium and lanthanum, precursors thereof for use in forming the catalysts, a method of forming the catalysts and to porous bodies containing the catalysts.

Nickel catalysts formed from coprecipitated materials and homogeneous on a microscopic scale are commonly used for the production of SNG by the low temperature steam reforming of liquid hydrocarbons. Similar materials may be used for the methanation of carbon oxides. These processes require catalysts of high activity at relatively low temperatures. Normally, the thermal stability and other physical parameters such as mechanical strength, and abrasion resistance of such catalysts are of secondary importance. The more successful catalysts are derived from a coprecipitated layer compound with the typical formulation

$$Ni_6Al_2(OH)_{16}CO_34H_2O$$

This compound is formed from a solution of nickel and aluminium salts by the addition of alkali (for example, sodium carbonate), and is followed by calcination of the product in air and forming into a suitable shape by, for example, tabletting, to give the finished product. The catalyst is normally reduced *in situ* prior to use. Precipitation of the layer compound may also be brought about homogeneously using a hydrolysable organic material. Alkali metal oxides, in particular, potassium oxide may be included in the catalyst formulation to improve the carbon gasification activity of the reduced catalyst. More recent developments include a thermally stable material prepared in the same way but promoted by chromia, added in the form of chromium nitrate during the preparation.

U.S. patent A—4215998 published in the interval between the priority date of this application and the filing date discloses a catalyst comprising nickel, aluminium and lanthanum. The document teaches that the catalyst can be prepared in a variety of ways, one of which is simultaneous precipitation from salts of these metals. No attention is drawn to the conditions of the precipitation in such a case nor to the nature of the relationship between the nickel, aluminium and lanthanum in the formed catalyst.

It is known from US patent 3394086 to add a metal promoter to a nickel catalyst comprising nickel and alumina, and it is there proposed that the promoter be added either as decomposable metal salts to the solutions in which a coprecipitation of nickel and aluminium takes place or to the wet precipitate. In the examples the promoter is added to the wet precipitate, which is the technique generally adopted in the literature, see, e.g. British patent 1056685. In no case is there a suggestion that attention should be paid to the conditions of the reaction and the nature of the catalyst formed.

The problem which confronted the present Applicants was to provide a nickel containing catalyst of high thermal stability and having outstanding resistance to carbon deposition, and which can be used particularly but not exclusively in the steam reforming of hydrocarbons. This problem is solved, according to the invention by providing a catalyst derived from a precursor comprising nickel, aluminium and lanthanum, and precursor being adapted for calcining to form the catalyst characterised in that the precursor has a layer structure and is of the approximate chemical composition:

$$Ni_6Al_xLa_y(CO_3)_{\frac{x-y}{2}}(OH)_{12+2(x+y)}nH_2O$$

where x is not less than 1 and not greater than 4, y is not less than 0.05 and not greater than 1.5 and n is approximately 4. Preferably x and y are in the range 1.5 to 3 and 0.1 to 0.5 respectively.

It is possible for part of the nickel content to be replaced by magnesium to provide a catalyst precursor of the approximate chemical composition:

$$Ni_{6-z}Al_xLa_yMg_z(CO_3)_{\frac{x-y}{2}}(OH)_{12+2(x+y)}nH_2O$$

and where z is not less than 0.1 and not greater than 4. Again it is preferred that x and y are in the range 1.5 to 3 and 0.1 to 0.5 respectively.

In the precursor, anions other than carbonate for example nitrates, phosphates etc., may also be present. The lanthanum component may be derived from pure lanthanum salts or mixtures of rare earth salts particularly lanthanum and cerium mixtures in which lanthanum is the major component.

The catalyst precursor is made by co-precipitation under controlled conditions of pH and temperature by the addition of alkalis such as sodium carbonate, sodium hydroxide, ammonium bicarbonate or ammonium hydroxide. Preferably ammonium bicarbonate is used, as it has been found that the presence of sodium, even in trace amounts, has a detrimental effect on the activity and stability of the catalysts. After precipitation, the material is filtered, washed and dried at elevated temperatures. It has been found that the removal of impurities such as sodium ions may be facilitated if the material is dried at an elevated temperature prior to washing. The washed and dried material is preferably only partially calcined at a temperature of approximately 300°C prior to forming into a suitable shape for process requirements.

The invention provides a method of forming a catalyst comprising nickel, aluminium and lanthanum, by first forming a catalyst precursor and then calcining the precursor, the precursor being formed by co-precipitating nickel, aluminium and lanthanum from a solution of their nitrates by addition of alkali, and recovering the precipitate characterised in that the pH and temperature of the solution are kept substantially constant throughout the addition so that the precursor formed comprises a layer structure and the approximate chemical composition

$$Ni_6Al_xLa_y(CO_3)_{\frac{x+y}{2}}(OH)_{12+2(x+y)}nH_2O$$

in which x is not less than 1 and not greater than 4; y is not less than 0.05 and not greater than 1.5, and n is approximately 4.

The catalyst composition may be utilized either in a form in which it is held within a porous ceramic matrix or as an apparently homogenous material, the form being chosen to meet the requirements of the particular process.

The catalyst precursor of the invention may be incorporated in a porous ceramic matrix. To achieve this, coprecipitation of the nickel, aluminium and lanthanum in the porous ceramic matrix may be induced using a homogeneous precipitation technique using a readily hydrolysable material such as urea. DE—C—740634 teaches that under certain conditions, urea hydrolysis may be used to precipitate or co-precipitate metals in the pores of a porous body. Specifically the document teaches the use of colloidal solutions to impregnate within the pores of a porous body. There is no teaching that solutions of salts can be used nor that such salts can interact to form a layer structure; there is also no mention of the nature of the characteristics of the porous body for the catalyst support. Attention is drawn to our copending European Patent Application 0044118 which describes and claims a method of making a catalyst located in a porous body, comprising introducing a solution of salts of a catalytically active metal component within the pores of a preformed low surface area ceramic matrix and decomposing the metal salts to metal oxide or hydroxide form by heating e.g. by calcining, wherein the solution also contains a hydrolysable material and after the solution of salts and hydrolysable material has been introduced into the pores of the ceramic matrix, the body is heated to a temperature suitable for controlled hydrolysis of the hydrolysable material thereby increasing the pH to precipitate the catalytically active metal component within the pores whereby the catalytically active metal component is almost exclusively confined to the pores.

Preferably the preformed ceramic matrix has an apparent porosity in the range 15% to 80% and has a mean pore diameter in the range of 0.1 µm to 20 µm. The matrix may be the wall of a hollow shape such as hollow spheres. The preformed ceramic matrix may be alpha—alumina but other preformed low surface matrices of ceramic materials such as silicon carbide, aluminosilicates, silica etc., may be used.

The ceramic matrix may be pretreated with acid or alkali to modify the interaction of the catalytically active material and the ceramic matrix. The surface of the ceramic matrix may also be modified by the addition of "spacer/support" material e.g. alumina within the pores of the ceramic matrix prior to the addition of the active phase. This may be accomplished by the simple impregnation of the ceramic matrix with a soluble salts of the "spacer/support" material, e.g. aluminium nitrate or by using the homogeneous precipitation technique. In each case the temperature of the calcination of the impregnated ceramic matrix must be carefully controlled to achieve the required surface properties.

In the preferred preparation for high temperature applications, the preformed alpha—alumina matrix is impregnated, under vacuum with a solution containing nickel, lanthanum and aluminium nitrates and also a precipitation agent such as urea. It should be noted that other promoters/spacers such as zirconium may be added, preferably as the nitrate, to further increase the stability and/or improve the selectivity of the catalyst. After draining, the alpha—alumina matrix may be heated to a temperature suitable for the controlled hydrolysis of the urea thus increasing the pH of the absorbed solution and bringing about the deposition of the insoluble hydroxides within the pores. The catalyst is then dried by heating to a suitably elevated temperature.

The metal loading to the catalyst may be increased by repetition of the process steps. Prior to re-impregnation of the catalyst the pores must be opened. In one aspect of the process the pores may be opened by thermal decomposition of material within the pores. Alternatively the catalyst is washed with water or weaker alkaline solution and then dried at a suitably elevated temperature. The catalyst of the required metal loading is subjected to a final calcination temperature of about 450°C.

The final catalyst composition in the ceramic matrix has the preferable range of nickel contents of 5—30 wt.% and 0.1—15 wt.% as lanthanum. It is preferred that the atomic ratios of Ni:Al in the active material are 1.5 to 4:1. If magnesium is present in the nickel-aluminium phase, it is preferred that the atomic ratios of Ni:Mg in the active material is 1 to 20:1.

The catalyst composition of the invention will have enhanced thermal stability and carbon gasification activity. The nickel catalyst compositions may be used for example in the high temperature steam reforming of hydrocarbons. Other possible applications include the methanation of gases containing high concentrations of carbon oxide particularly arising from coal gasification processes.

Several non-limiting examples of the process of the invention and catalysts produced thereby are given below.

Example 1

Coprecipitated Samples A and B were prepared using the following procedures.

A solution A was prepared by dissolving 291 g of $Ni(NO_3)_26H_2O$, 150 g of $Al(NO_3)_3 \cdot 9H_2O$ and 32 g of $La(NO_3)_36H_2O$ in 1 $dm^3$ of de-ionised water; solution B was prepared by dissolving 300 g of anhydrous ammonium bicarbonate in 2.5 $dm^3$ of de-ionised water. Solution A was added dropwise and with vigorous stirring to solution B, both being maintained at room temperature. The pH remained at approximately 7 throughout the addition. When this was complete, the resultant slurry was heated slowly and with vigorous stirring to 80°C to complete the precipitation by ensuring that any soluble nickel bicarbonate formed at 20°C was decomposed. The precipitate was then filtered to dryness in a Buchner funnel, dried at 100°C in a ventilated oven for 48 h, washed in boiling de-ionised water (4 $dm^3$), and refiltered in the Buchner funnel where it was further washed with five 1 $dm^3$ portions of boiling de-ionised water. It was then redried at 100°C in the ventilated oven for 24 h. The resultant material was ground to a fine powder and a sample of it was transferred to a silica boat in a tubular furnace in which it was heated in a flow of pure argon over a period of 175 min from room temperature to 450°C, at which temperature it was maintained for 17 h. This process brought about the complete decomposition of the precipitate to a mixture of the oxides. (Calcination in air rather than treatment in argon is also possible). The furnace was then cooled to 200°C and hydrogen was mixed with the argon so that the $H_2$:Ar ratio was 2.0. The temperature was raised from 200°C to 600°C over a period of 170 min and the temperature was then maintained at 600°C for 2 h. This brought about reduction of the nickel component of the catalyst. The temperature was lowered to room temperature and the sample was passivated by turning off the hydrogen flow and diverting the argon through a bottle containing water prior to contacting the catalyst, for a period of 3 h, with the argon+water mixture. The catlayst so produced had a Ni/Al atomic ratio of 2.5 and the lanthanum content, expressed as an atomic fraction

$$\frac{La}{Ni+Al+La}$$

was 0.05. The catalyst was designated Sample A.

An equivalent material (Sample B) was prepared following an identical procedure but omitting the lanthanum nitrate from Solution A, all other components being the same.

The Ni particle diameters of Samples A and B were determined by X-ray diffraction line-broadening techniques and were found to be 165Å and 156Å respectively. The samples were then aged in $H_2/H_2O$ flows ($H_2/H_2O$=8) at 800°C for a period of 3 h, a test which is generally accepted to give an indication of the stability of the supplies. It was found that in both cases, the resultant particle size was approximately 400Å.

Thus, we conclude that the presence of lanthanum has no detrimental effect on the resistance to sintering of the co-precipitated catalysts, each sintering to approximately the same extent.

The activities of samples A and B for the methanation of carbon monoxide were tested using a differential scanning calorimeter before and after the sintering test referred to above. It was found that the activity of Sample A at 300°C was 88% of the fresh activity after the sintering test while that of sample B was 74% of the fresh activity after the test. We therefore conclude that lanthanum imparts a slight advantage to the catalyst in preserving its activity after exposure to $H_2/H_2O$ atmospheres. The catalysts so produced have good thermal stability and are capable of resisting carbon laydown.

Example 2

A quantity of the washed precipitate from which was prepared Sample B was immersed in a solution of $La(NO_3)_3 \cdot 6H_2O$ the quantity and strength of the solution being such that the precipitate was just wetted and the quantity of lanthanum so introduced into the catalyst was such that the atomic fraction

$$\left(\frac{La}{(Ni+Al+La)}\right)$$

was 0.012. The sample was then decomposed and reduced as described in Example 1 (designated Sample C) and was tested for methanation activity in the DSC. The activity of Sample C at 300°C was 54% higher than that of Sample A.

Example 3

100 g of a pure alpha—$Al_2O_3$ which had been formed in the shape of Raschig rings (6 mm×6 mm) and having a total surface area of 0.7 $m^2g^{-1}$ and having a water absorption of 30% and a mean pore diameter of approximately 2.5 μm were vacuum impregnated with a solution of 350 g of $Ni(NO_3)_26H_2O$ and 73 g of urea dissolved in 150 $cm^3$ of deionised water.

Excess of the solution was drained from the alpha—$Al_2O_3$ matrix. The impregnated rings were laid in a single layer on an aluminium tray and were placed in a ventilated oven at 95° for 17 h. Hydrolysis of the urea took place and a precipitate formed in the pores of the matrix. Decomposition of the precipitate and

reduction of the resultant NiO was carried out as in Example 1 except that the decomposition was 4 h and reduction time (at 600°C) was 4 h. The sample, designated Sample D, was passivated as before. A higher metal loading of the sample could be achieved by further impregnating the rings after thermal decomposition at 310°C in an air oven for 2 h, a procedure which was essential to open the pores of the rings for further absorption of solutions.

Further samples were prepared using a solution of 350 g $Ni(NO_3)_2 6H_2O$, 150 g $Al(NO_3)_3 9H_2O$ and 217 g urea in 150 g of deionised water, and using a similar solution containing 50.5 g of $La(NO_3)_3 6H_2O$ in addition to the Ni and Al salts and the urea. Both samples were decomposed and reduced as for Sample D and were designated Samples E and F respectively. As for Sample D, the metals content could be increased by a series of steps involving partial decomposition and further impregnation. The following table gives the Ni contents (wt.%) of the reduced samples, the Ni particle diameters determined by X-ray diffraction and the total surface area (determined by absorption of Krypton at −195°C):

| Sample | Ni content /wt.% | Average Ni particle diameter/Å | Total surface area/$m^2g^{-1}$ |
|---|---|---|---|
| D | 4.5 | 257 | 2.5 |
| E | 4.3 | 198 | 7.6 |
| F | 4.2 | 117 | 6.5 |

It can be seen that the presence of Al gives an improved dispersion of the nickel and that La gives an even greater improvement. The increase in surface area compared with that of the alpha—$Al_2O_3$ matrix ($0.7m^2g^{-1}$) also reflects these improvements in dispersions.

Example 4

The samples D, E, and F prepared in Example 3 were tested in a tubular flow reactor for their activities in the low pressure steam reforming of a heptane feed at an exit temperature of 650°C. The steam:carbon ratio was 4:1. Sample D was found to have good activity initially but this decreased with time and after 1 h, the sample had disintegrated presumably due to the deposition of carbon in the voids of the matrix. Sample E gave an improved activity but, although it did not disintegrate, back-pressure built up, again presumably due to carbon deposition. Sample F gave 100% conversion of the heptane feed over the period of the test and there was no evidence for carbon deposition. We therefore conclude that, in the alpha—$Al_2O_3$ matrix, La has an advantageous effect on the catalyst, preventing carbon deposition reactions (i.e. giving greater carbon gasification rates).

Example 5

Catalyst samples D, E and F were compared for their methanation activities in the differential scanning calorimeter. Their activities at 300°C were in the ratio 6:3:2. It was noted that sample D became deactivated when methanation was carried out above 450°C. The samples were also subjected to a steam sinter test as described in Example 1, the duration of the test being 4 h. The subsequent activities of the samples were in the ratio 1:10:18. We therefore conclude that La improves the stability of the Ni—Al formulation when held in the alpha—$Al_2O_3$ matrix much more than it does in the coprecipitate (see Example 1).

Example 6

The precursor to Sample F was washed using a series of different reagents prior to the decomposition stage. The reagents used were water, NaOH (0.1 M), $Na_2CO_3$ (0.1 M), $(NH_4)_2CO_3$ (0.1 M) and KOH (0.1 M). Samples of the undecomposed material were immersed in these reagents which has been preheated to 80—90°C and the temperature was raised to the boiling point of the reagent for 10 min. The reagent was then decanted and replaced by two portions of deionized water. In all cases, a volume of reagent three times that of the sample was used. The samples were then dried in a ventilated oven at 120°C for 17 h. Thermal analysis investigations showed that water, KOH and NaOH were most effective at removing unreacted nitrates and unhydrolysed urea from the alpha—$Al_2O_3$ matrix, leaving behind pure precipitates as described above. The washed samples were heated in argon to decompose the precipitate and reduced as described in Example 3. Their relative activities at 300°C for the methanation of CO were determined with the differential scanning calorimeter as follows:

| Sample F | Ni content after washing wt.% | Relative activity at 300°C |
|---|---|---|
| No treatment | 5.4 | 1.0 |
| $H_2O$ | 3.9 | 2.6 |
| NaOH | 5.1 | 2.5 |
| $Na_2CO_3$ | 4.5 | 1.0 |
| $(NH_4)_2CO_3$ | 5.1 | 1.4 |
| KOH | not determined | 2.8 |

Example 7

Two samples equivalent to samples E and F were made by a series of three depositions as described above. The La-free sample had a Ni content of 10.4 wt.% and the La-containing sample had a Ni content of 9.5 wt.%. The Ni areas of the samples were found, using hydrogen chemisorption at 20°C, to be 0.4 and 0.96 $m^2g^{-1}$ respectively. This further demonstrates the effect to La on the active material held within the alpha—$Al_2O_3$ matrix, the Ni area being proportioned to the activity of the catalyst.

**Claims**

1. A catalyst derived from a precursor comprising nickel, aluminium and lanthanum, the precursor being adapted for calcining to form the catalyst characterised in that the precursor has a layer structure and is of the approximate chemical composition

$$Ni_6Al_xLa_y(CO_3)_{\frac{x-y}{2}}(OH)_{12-2(x-y)}nH_2O$$

in which x is not less than 1 and not greater than 4; y is not less than 0.05 and not greater than 1.5 and n is approximately 4.

2. A catalyst according to Claim 1 characterized in that the precursor is of the defined formula where x is in the range of 1.5 to 3 and y is in the range of 0.1 to 0.5.

3. A catalyst according to Claim 1 or 2 characterised in that the precursor is of the approximate chemical composition

$$Ni_{6-z}Al_xLa_yMg_z(CO_3)_{\frac{x+y}{2}}(OH)_{12-2(x+y)}nH_2O$$

where x, y and n are as defined and wherein z is in the range of 0.1 to 4.

4. A catalyst according to any of Claims 1 to 3 characterised in that the catalyst precursor is present in the pores of a preformed low area ceramic matrix.

5. A method of forming a catalyst comprising nickel, aluminium and lanthanum, by first forming a catalyst precursor and then calcining the precursor, the precursor being formed by co-precipitating nickel, aluminium and lanthanum from a solution of their nitrates by addition of alkali, and recovering the precipitate characterised in that the pH and temperature of the solution are kept substantially constant throughout the addition so that the precursor formed comprises a layer structure and has the approximate chemical composition

$$Ni_6Al_xLa_y(CO_3)_{\frac{x+y}{2}}(OH)_{12-2(x-y)}nH_2O$$

in which x is not less than 1 and not greater than 4; y is not less than 0.05 and not greater than 1.5, and n is approximately 4.

6. A method according to Claim 5 characterised in that the pH of the solution is kept at approximately 7.

7. A method according to Claim 5 or 6 characterised in that the solution is kept at room temperature.

8. A method according to any of Claims 5, 6 or 7 characterised in that the precursor is filtered from the solution in which it is precipitated, washed and dried and partially calcined at approximately 300°C before it is fully calcined.

9. A method according to any of Claims 5, 6, 7 or 8 characterised in that the precursor is of the defined formula where x is in the range of 1.5 to 3 and y is in the range of 0.1 to 0.5.

10. A method according to any of Claims 5 to 9 characterised in that the precursor is of the approximate chemical composition

$$Ni_{6-z}Al_xLa_yMg_z(CO_3)_{\frac{x+y}{2}}(OH)_{12+2(x+y)}nH_2O$$

where x, y and n are as defined and wherein z is in the range of 0.1 to 4.

11. A method according to any of Claims 5 to 10 characterised in that the precursor includes anions other than carbonate, e.g. nitrate, phosphate.

12. A method according to any of Claims 5 to 11 characterised in that the lanthanum component is derived from pure lanthanum salts, or mixtures of rare earth salts.

13. A method according to Claim 12 characterised in that the rare earth salts are lanthanum and cerium mixtures in which lanthanum is the major component.

14. A method according to any of Claims 5 to 13 characterised in that the precursor includes zirconium.

15. A method according to any of Claims 5 to 14 characterised in that the catalyst precursor is present in the pores of a preformed low surface area ceramic matrix.

16. A method of making a catalyst located in a porous body, comprising forming a catalyst precursor and then calcining the precursor characterised by forming a solution of salts of nickel, aluminium and lanthanum, adding a hydrolysable material to the solution, locating the combined solution within the pores of a preformed low surface area ceramic matrix, heating the combined solution to a temperature suitable for controlled hydrolysis of the hydrolysable material thereby increasing the pH to precipitate a precursor according to Claim 1 within the pores whereby the catalytically active metal component is almost exclusively confined to the pores, and decomposing the metal salts to metal oxide or hydroxide form by calcining.

17. A method according to Claim 16 characterised in that the ceramic matrix has been pre-treated with alkali or acid to modify the interaction between the catalytically active material and the ceramic matrix.

18. A method according to Claim 16 characterised in the surface of the ceramic matrix has been modified by the addition of alumina spacer material within the pores of the ceramic matrix prior to the addition of the active phase.

19. A catalyst derived from a precursor comprising nickel, aluminium and lanthanum, the precursor being adapted for calcining to form the catalyst characterised in that the precursor has a layer structure and is of the approximate chemical composition

$$Ni_6Al_xLa_y(CO_3)_{\frac{x+y}{2}}(OH)_{12+2(x+y)}nH_2O$$

in which x is not less than 1 and not greater than 4; y is not less than 0.05 and not greater than 1.5 and n is approximately 4, when made by a method according to any of Claims 5 to 14.

20. A catalyst according to Claim 19 characterised in that the precursor made by the method is of the defined formula where x is in the range of 1.5 to 3 and y is in the range of 0.1 to 0.5.

21. A catalyst according to Claim 19 or 18 characterised in that the precursor made by the method is of the approximate chemical composition

$$Ni_{6-z}Al_xLa_yMg_z(CO_3)_{\frac{x+y}{2}}(OH)_{12+2(x+y)}nH_2O$$

where x, y and n are as defined and wherein z is in the range of 0.1 to 4.

**Patentansprüche**

1. Katalysator, der sich von einem Nickel, Aluminium und Lanthan enthaltenden vorläufer ableitet, wobei der Vorläufer zur Bildung des Katalysators kalzinierbar ist, dadurch gekennzeichnet, dass der Vorläufer eine Schichtstruktur aufweist und ungefähr die chemische Zusammensetzung

$$Ni_6Al_xLa_y(CO_3)_{\frac{x+y}{2}}(OH)_{12+2(x+y)}nH_2O$$

besitzt, worin x nicht weniger als 1 und nicht mehr als 4, y nicht weniger als 0,05 und nicht mehr als 1,5 und n ungefähr 4 betragen.

2. Katalysator nach Anspruch 1, dadurch gekennzeichnet, dass der Vorläufer der angegebenen Formel entspricht, wobei x im Bereich von 1,5 bis 3 und y im Bereich von 0,1 bis 0,5 liegen.

3. Katalysator nach Anspruch 1 oder 2, dadurch gekennzeichnet, dass der Vorläufer ungefähr die chemische Zusammensetzung

$$Ni_{6-z}Al_xLa_yMg_z(CO_3)_{\frac{x+y}{2}}(OH)_{12+2(x+y)}nH_2O$$

besitzt, worin x, y und n die oben angegebene Bedeutung haben und z im Bereich von 0,1 bis 4 liegt.

4. Katalysator nach einem der Ansprüche 1 bis 3, dadurch gekennzeichnet, dass sich der Katalysatorvorläufer in den Poren einer vorgebildeten keramischen Grundmasse mit geringer Oberfläche befindet.

5. Verfahren zur Herstellung eines Nickel, Aluminium und Lanthan enthaltenden Katalysators, bei dem man zunächst einen Katalysatorvorläufer bildet und diesen dann kalziniert, wobei der Vorläufer durch gemeinsame Fällung von Nickel, Aluminium und Lanthan aus einer Lösung ihrer Nitrate durch Alkalizugabe gebildet wird, und den Niederschlag gewinnt, dadurch gekennzeichnet, dass man den pH und die Temperatur der Lösung während der ganzen Zugabe im wesentlichen Konstant hält, sodass der gebildete Vorläufer eine Schichtstruktur aufweist und ungefähr die chemische Zusammensetzung

$$Ni_6Al_xLa_y(CO_3)_{\frac{x+y}{2}}(OH)_{12+2(x+y)}nH_2O$$

besitzt, worin x nicht weniger als 1 und nicht mehr als 4, y nicht weniger als 0,05 und nicht mehr als 1,5 und n ungefähr 4 betragen.

6. Verfahren nach Anspruch 5, dadurch gekennzeichnet, dass man den pH der Lösung bei ungefähr 7 hält.

7. Verfahren nach Anspruch 5 oder 6, dadurch gekennzeichnet, dass man die Lösung bei Raumtemperatur hält.

8. Verfahren nach einem der Ansprüche 5, 6 oder 7, dadurch gekennzeichnet, dass man den Vorläufer von der Lösung, in der er gefällt wird, abfiltriert, wäscht, trocknet und bei ungefähr 300°C teilweise kalziniert, bevor er völlig kalziniert wird.

9. Verfahren nach einem der Ansprüche 5, 6, 7 oder 8, dadurch gekennzeichnet, dass der Vorläufer der oben angegebenen Formel entspricht, worin x im Bereich von 1,5 bis 3 und y im Bereich von 0,1 bis 0,5 liegen.

10. Verfahren nach einem der Ansprüche 5 bis 9, dadurch gekennzeichnet, dass der Vorläufer ungefähr die chemische Zusammensetzung

$$Ni_{6-z}Al_xLa_yMg_z(CO_3)_{\frac{x+y}{2}}(OH)_{12+2(x+y)}nH_2O$$

besitzt, worin x, y und n die oben angegebenen Bedeutungen haben und z im Bereich von 0,1 bis 4 liegt.

11. Verfahren nach einem der Ansprüche 5 bis 10, dadurch gekennzeichnet, dass der Vorläufer ferner von Carbonat verschiedene Anionen, z.B. Nitrat oder Phosphat, enthält.

12. Verfahren nach einem der Ansprüche 5 bis 11, dadurch gekennzeichnet, dass sich die Lanthankomponente von reinen Lanthansalzen oder Gemischen von Salzen seltener Erden ableitet.

13. Verfahren nach Anspruch 12, dadurch gekennzeichnet, dass als Salze seltener Erden Lanthan- und Cergemische mit Lanthan als der Hauptkomponente vorliegen.

14. Verfahren nach einem der Ansprüche 5 bis 13, dadurch gekennzeichnet, dass der Vorläufer ferner Zirkonium enthält.

15. Verfahren nach einem der Ansprüche 5 bis 14, dadurch gekennzeichnet, dass sich der Katalysatorvorläufer in den Poren einer vorgebildeten keramischen Grundmasse mit geringer Oberfläche befindet.

16. Verfahren zur Herstellung eines in einem porösen Körper angeordneten Katalysators, bei dem man einen Katalysatorvorläufer bildet und diesen dann kalziniert, dadurch gekennzeichnet, dass man eine Lösung von Nickel-, Aluminium- und Lanthansalzen herstellt, der Lösung einen hydrolysierbaren Stoff zusetzt, die gesamte Lösung in die Poren einer vorgebildeten keramischen Grundmasse geringer Oberfläche einbringt, die gesamte Lösung auf eine zur kontrollierten Hydrolyse des hydrolysierbaren Stoffes geeignete Temperatur erhitzt und dadurch den pH zur Ausfällung eines Vorläufers nach Anspruch 1 innerhalb der Poren erhöht, wodurch die katalytisch aktive Metallkomponente fast ausschliesslich in den Poren eingegrenzt wird, und die Metallsalze durch Kalzinieren zur Metalloxyd oder -hydroxydform zersetzt.

17. Verfahren nach Anspruch 16, dadurch gekennzeichnet, dass die keramische Grundmasse zur Modifizierung der Wechselwirkung zwischen dem katalytisch aktiven Stoff und der keramischen Grundmasse mit Alkali oder Säure vorbehandelt wurde.

18. Verfahren nach Anspruch 16, dadurch gekennzeichnet, dass die Oberfläche der keramischen Grundmasse vor der Zugabe der aktiven Phase durch Zusatz eines Aluminiumoxydabstandsstoffes innerhalb der Poren der keramischen Grundmasse modifiziert wurde.

19. Katalysator, der sich von einem Nickel, Aluminium und Lanthan enthaltenden Vorläufer ableitet, wobei der Vorläufer zur Bildung des Katalysators kalzinierbar ist, dadurch gekennzeichnet, dass der Vorläufer eine Schichtstruktur aufweist und ungefähr die chemische Zusammensetzung

$$Ni_6Al_xLa_y(CO_3)_{\frac{x+y}{2}}(OH)_{12+2(x+y)}nH_2O$$

besitzt, worin x nicht weniger als 1 und nicht mehr als 4, y nicht weniger als 0,05 und nicht mehr als 1,5 und n ungefähr 4 betragen, wenn nach einem Verfahren gemäss einem der Ansprüche 5 bis 14 hergestellt.

20. Katalysator nach Anspruch 19, dadurch gekennzeichnet, dass der nach dem Verfahren hergestellte Vorläufer der angegebenen Formel entspricht, worin x im Bereich von 1,5 bis 3 und y im Bereich von 0,1 bis 0,5 liegen.

21. Katalysator nach Anspruch 19 oder 18, dadurch gekennzeichnet, dass der nach dem Verfahren hergestellte Vorläufer ungefähr die chemische Zusammensetzung

$$Ni_{6-z}Al_xLa_yMg_z(CO_3)_{\frac{x+y}{2}}(OH)_{12+2(x+y)}nH_2O$$

besitzt, worin x, y und n die oben angegebenen Bedeutungen haben und z im Bereich von 0,1 bis 4 liegt.

**Revendications**

1. Un catalyseur dérivé d'un précurseur comprenant du nickel, de l'aluminium et du lanthane, le précurseur étant adapté à la calcination pour former le catalyseur caractérisé en ce que le précurseur a une structure stratifiée et a la composition chimique approximative:

$$Ni_6Al_xLa_y(CO_3)_{\frac{x+y}{2}}(OH)_{12+2(x+y)}nH_2O$$

dans laquelle x n'est pas inférieur à 1 et pas supérieur à 4; y n'est pas inférieur à 0,05 et pas supérieur à 1,5 et n est approximativement 4.

2. Un catalyseur selon la revendication 1 caractérisé en ce que le précurseur a la formule définie dans laquelle x est compris dans l'intervalle de 1,5 à 3 et y est compris dans l'intervalle de 0,1 à 0,5.

3. Un catalyseur selon la revendication 1 ou 2 caractérisé en ce que le précurseur a la composition chimique approximative:

$$Ni_{6-z}Al_xLa_yMg_z(CO_3)_{\frac{x+y}{2}}(OH)_{12+2(x+y)}nH_2O$$

dans laquelle x, y et n sont tels qu'ils sont définis et dans laquelle z est compris dans l'intervalle de 0,1 à 4.

4. Un catalyseur selon l'une quelconque des revendications 1 à 3 caractérisé en ce que le précurseur de catalyseur est présent dans les pores d'une matrice céramique préformée de surface faible.

5. Un procédé de formation d'un catalyseur comprenant du nickel, de l'aluminium et du lanthane, en formant d'abord un précurseur de catalyseur et en calcinant ensuite le précurseur, le précurseur étant formé par coprécipitation de nickel, d'aluminium et de lanthane à partir d'une solution de leurs nitrates par addition d'un alcali, et récupération du précipité caractérisé en ce que le pH et la température de la solution sont maintenus essentiellement constants tout au long de l'addition de façon à ce que le précurseur formé possède une structure stratifiée et ait al composition chimique approximative:

$$Ni_6Al_xLa_y(CO_3)_{\frac{x+y}{2}}(OH)_{12+2(x+y)}nH_2O$$

dans laquelle x n'est pas inférieur à 1 et pas supérieur à 4; y n'est pas inférieur a 0,05 et pas supérieur à 1,5, et n est approximativement 4.

6. Un procédé selon la revendication 5 caractérisé en ce que le pH de la solution est maintenu à approximativement 7.

7. Un procédé selon la revendication 5 ou 6 caractérisé en ce que la solution est maintenue à la température ambiante.

8. Un procédé selon l'une quelconque des revendications 5, 6 ou 7 caractérisé en ce que le précurseur est filtré à partir de la solution dans laquelle il est précipité, lavé et séché et calciné partiellement à approximativement 300°C avant d'être complètement calciné.

9. Un procédé selon l'une quelconque des revendications 5, 6, 7 ou 8 caractérisé en ce que le précurseur a la formule définie dans laquelle x est compris dans l'intervalle de 1,5 à 3 et y est compris dans l'intervalle de 0,1 à 0,5.

10. Un procédé selon l'une quelconque des revendications 5 à 9 caractérisé en ce que le précurseur a la composition chimique approximative:

$$Ni_{6-z}Al_xLa_yMg_z(CO_3)_{\frac{x+y}{2}}(OH)_{12+2(x+y)}nH_2O$$

dans laquelle x, y et n sont tels qu'ils sont définis et dans laquelle z est compris dans l'intervalle de 0,1 à 4.

11. Un procédé selon l'une quelconque des revendications 5 à 10 caractérisé en ce que le précurseur comporte des anions différents des carbonates, par exemple des nitrates et des phosphates.

12. Un procédé selon l'une quelconque des revendications 5 à 11 caractérisé en ce que le composant lanthane est dérivé de sels de lanthane purs ou de mélanges de sels de terres rares.

13. Un procédé selon la revendication 12 caractérisé en ce que les sels de terres rares sont des mélanges de lanthane et de cérium dans lesquels le lanthane est le composant majeur.

14. Un procédé selon l'une quelconque des revendications 5 à 13 caractérisé en ce que le précurseur inclut du zirconium.

15. Un procédé selon l'une quelconque des revendications 5 à 14 caractérisé en ce que le précurseur de catalyseur est présent dans les pores d'une matrice céramique préformée de surface spécifique faible.

16. Un procédé de fabrication d'un catalyseur situé dans un corps poreux, comprenant la formation d'un précurseur de catalyseur et ensuite la calcination du précurseur, caractérisé par la formation d'une solution de sels de nickel, d'aluminium et de lanthane, l'addition d'un matériau hydrolysable à la solution, le placement de la solution combinée dans les pores d'une matrice céramique préformée de surface spécifique faible, le chauffage de la solution combinée à une température convenable pour une hydrolyse contrôlée du matériau hydrolysable, en augmentant ainsi le pH pour précipiter un précurseur selon la revendication 1 au sein des pores, ce par quoi le composant métallique actif catalytiquement est presque exclusivement confiné aux pores, et la décomposition des sels métalliques vers des formes d'oxyde ou d'hydroxyde métalliques par calcination.

17. Un procédé selon la revendication 16 caractérisé en ce que la matrice céramique a été prétraitée avec un alcali ou un acide pour modifier l'interaction entre le matériau actif catalytiquement et la matrice céramique.

18. Un procédé selon la revendication 16 caractérisé en ce que la surface de la matrice céramique a été modifiée par addition de matériau d'écartement à l'alumine au sein des pores de la matrice céramique avant l'addition de la phase active.

19. Un catalyseur dérivé d'un précurseur comprenant du nickel, de l'aluminium et du lanthane, le précurseur étant adapté à la calcination pour former le catalyseur caractérisé en ce que le précurseur possède une structure stratifiée et a la composition chimique approximative:

$$Ni_6Al_xLa_y(CO_3)_{\frac{x+y}{2}}(OH)_{12+2(x+y)}nH_2O$$

dans laquelle x n'est pas inférieur à 1 et pas supérieur à 4; y n'est pas inférieur à 0,05 et pas supérieur à 1,5 et n est approximativement 4, lorsqu'il est préparé par un procédé selon l'une quelconque des revendications 5 à 14.

20. Un catalyseur selon la revendication 19 caractérisé en ce que le précurseur préparé par le procédé a la formule définie dans laquelle x est compris dans l'intervalle de 1,5 à 3 et y est compris dans l'intervalle de 0,1 à 0,5.

21. Un catalyseur selon la revendication 19 ou 18 caractérisé en ce que le précurseur préparé par le procédé a la composition chimique approximative:

$$Ni_{6-z}Al_xLa_yMg_z(CO_3)_{\frac{x+y}{2}}(OH)_{12+2(x+y)}nH_2O$$

dans laquelle x, y et n sont tels qu'ils sont définis et dans laquelle z est compris dans l'intervalle de 0,1 à 4.